# EUROPEAN PATENT APPLICATION

(11) **EP 4 572 248 A1**
(43) Date of publication of application: **18.06.2025**
(21) Application number: 22954259.2
(22) Date of filing: 08.08.2022
(51) Int. Cl.: H04L 27/00

(54) **NETWORK DEVICE MANAGEMENT METHOD AND APPARATUS**

(71) Applicant: Beijing Xiaomi Mobile Software Co., Ltd., Beijing 100085 (CN)
(72) Inventor: WU, Jinhua, Beijing 100085 (CN)
(74) Representative: Gunzelmann, Rainer
(86) International application number: PCT/CN2022/110956
(87) International publication number: WO 2024/031279

(57) **Abstract**

The present invention relates to the field of communications and provides a network device management method and apparatus. The method comprises: sending a first perception support identifier to a core network element by means of a network device, wherein the first perception support identifier is used for identifying that the network device supports a perception function and is used for assisting the core network element in configuring a network device management list comprising a tracking area corresponding to the network device supporting the perception function. According to the present invention, a core network element acquires perception capability information of a network device, and configures for a user equipment the list of network devices having a perception capability, thereby providing a basis for the user equipment to use a communication service having a perception function.

## Description

### TECHNICAL FIELD

The disclosure relates to the field of mobile communication technologies, and in particular to a method for network device management and an apparatus for network device management.

### BACKGROUND

Sensing technologies assisted by communication technologies provide a higher sensing accuracy and have a wider application range for the sensing technologies. Communication technologies assisted by sensing technologies provide a communication system with information including but not limited to information related to communication channels or environments, which is used to improve communication services of the system. Therefore, a sensing application can be expanded by using a network device having a sensing ability, thereby improving communication performance of a user equipment. In an existing mobile network communication system, how to obtain the sensing ability of the network device still needs to be solved.

### SUMMARY

The disclosure proposes a method for network device management and an apparatus for network device management, and thus provides a method for obtaining information of a network device having a sensing ability using a core network element to, so as to provide a communication service with a sensing function to a user equipment, thereby improving the communication performance of system.

According to a first aspect of embodiments of the disclosure, a method for network device management is provided. The method is performed by a network device, and includes: sending a first sensing support identifier to a core network element, in which the first sensing support identifier is used to indicate that the network device supports a sensing function and to assist the core network element to configure a network device management list for a user equipment (UE), and the network device management list includes a tracking area corresponding to the network device that supports the sensing function.

In some embodiments, sending the first sensing support identifier to the core network element includes at least one of: sending the first sensing support identifier to the core network element via a network connection setup request message; sending the first sensing support identifier to the core network element via a network configuration update request message; or sending the first sensing support identifier to the core network element via an initial user equipment message.

In some embodiments, the method includes: receiving a feedback message sent by the core network element, in which the feedback message includes a second sensing support identifier, and the second sensing support identifier is used to indicate that the core network element supports a sensing function.

In some embodiments, receiving the feedback message sent by the core network element, includes: in response to sending the first sensing support identifier via the network connection setup request message, receiving a network connection setup response message sent by the core network element; or, in response to sending the first sensing support identifier via the network configuration update request message, receiving a network configuration update acknowledgement message sent by the core network element.

In some embodiments, before sending the first sensing support identifier to the core network element, the method further includes: receiving an inquiry request sent by the core network element, in which the inquiry request is used to inquire whether the network device supports the sensing function; sending the first sensing support identifier to the core network element, including: in response to the inquiry request, sending the first sensing support identifier to the core network element.

According to a second aspect of embodiments of the disclosure, a method for network device management is provided. The method is performed by a core network element, and includes: receiving a first sensing support identifier sent by a network device, in which the first sensing support identifier is used to indicate that the network device supports a sensing function; configuring a network device management list, in which the network device management list includes a tracking area corresponding to the network device that supports the sensing function; and sending the network device management list to a UE.

In some embodiments, receiving the first sensing support identifier sent by the network device, includes at least one of: receiving the first sensing support identifier via a network connection setup request message; receiving the first sensing support identifier via a network configuration update request message; or, receiving the first sensing support identifier via an initial UE message.

In some embodiments, the method further includes: sending a feedback message to the network device, in which the feedback message includes a second sensing support identifier, and the second sensing support identifier is used to indicate that the core network element supports a sensing function.

In some embodiments, sending the feedback message to the network device, includes: in response to receiving the first sensing support identifier via the network connection setup request message, sending a network connection setup response message to the network device; or in response to receiving the first sensing support identifier via the network configuration update request message, sending a network configuration update acknowledgement message to the network device.

In some embodiments, before receiving the first sensing support identifier sent by the network device, the method further includes: sending an inquiry request to the network device, in which the inquiry request is used to inquire whether the network device supports the sensing function.

In some embodiments, configuring the network device management list, includes: determining a tracking area corresponding to the network device according to a mapping relationship between the network device and the tracking areas; and determining a tracking area list corresponding to the network device that supports the sensing function as the network device management list.

According to a third aspect of embodiments of the disclosure, a method for network device management is provided. The method is performed by a UE, and includes: receiving a network device management list configured by a core network element, in which the network device management list includes a tracking area corresponding to a network device that supports a sensing function.

According to a fourth aspect of embodiments of the disclosure, a method for network device management is provided. The method includes: sending, by a network device, a first sensing support identifier to a core network element, in which the first sensing support identifier is used to indicate that the network device supports a sensing function; configuring, by the core network element, a network device management list according to the first sensing support identifier, in which the network device management list includes a tracking area corresponding to the network device that supports the sensing function; and receiving, by a UE, the network device management list configured by the core network element.

According to a fifth aspect of embodiments of the disclosure, a network device is provided. The network device includes: a transceiver module, configured to send a first sensing support identifier to a core network element, in which the first sensing support identifier is used to indicate that the network device supports a sensing function and to assist the core network element to configure a network device management list, and the network device management list includes a tracking area corresponding to the network device that supports the sensing function.

According to a sixth aspect of embodiments of the disclosure, a core network element is provided. The core network element includes: a transceiver module, configured to receive a first sensing support identifier sent by a network device, in which the first sensing support identifier is used to indicate that the network device supports a sensing function; a configuring module, configured to configure a network device management list, in which the network device management list includes a tracking area corresponding to the network device that supports the sensing function; and the transceiver module, further configured to send the network device management list to a UE.

According to a seventh aspect of embodiments of the disclosure, a UE is provided. The UE includes: a transceiver module, configured to receive a network device management list configured by a core network element, in which the network device management list includes a tracking area corresponding to a network device that supports a sensing function.

According to an eighth aspect of embodiments of the disclosure, a communication system is provided. The communication system includes: a UE, a core network element and a network device. The network device sends a first sensing support identifier to the core network element, in which the first sensing support identifier is used to indicate that the network device supports a sensing function. The core network element configures a network device management list according to the first sensing support identifier, in which the network device management list includes a tracking area corresponding to the network device that supports the sensing function. The core network element sends the network device management list to the UE. The UE receives the network device management list.

According to a ninth aspect of embodiments of the disclosure, a communication device is provided. The communication device includes: a transceiver, a memory, and a processor connected to the transceiver and the memory, respectively. The processor is configured to control radio signal transceiving of the transceiver by executing computer-executable instructions stored on the memory, and capable of implementing the method of any one of the methods described in the embodiments of the first aspect to the fourth aspect.

According to a tenth aspect of embodiments of the disclosure, a computer storage medium having computer executable instructions stored thereon is provided. After the computer executable instructions are executed by a processor, the method of any one of the methods described in the embodiments of the first aspect to the fourth aspect is implemented.

The embodiments of the disclosure provide a method for network device management and an apparatus for network device management. The network device sends the first sensing support identifier to the core network element, in which the first sensing support identifier is used to indicate that the network device supports the sensing function and to assist the core network element to configure the network device management list, in which the network device management list includes the tracking area corresponding to the network device that supports the sensing function. Based on this, a communication service with the sensing function can be provided to the UE, thereby improving communication performance of the system.

Additional aspects and advantages of embodiments of disclosure will be given in part in the following descriptions, become apparent in part from the following descriptions, or be learned from the practice of the disclosure.

### BRIEF DESCRIPTION OF THE DRAWINGS

The above and/or additional aspects and advantages of the disclosure will become apparent and easily understood from the following description of the embodiments in combination with the accompanying drawings.
FIG. 1 is a flowchart of a method for network device management according to an embodiment of the disclosure.
FIG. 2 is a flowchart of a method for network device management according to an embodiment of the disclosure.
FIG. 3 is a flowchart of a method for network device management according to an embodiment of the disclosure.
FIG. 4 is a flowchart of a method for network device management according to an embodiment of the disclosure.
FIG. 5 is a flowchart of a method for network device management according to an embodiment of the disclosure.
FIG. 6 is a flowchart of a method for network device management according to an embodiment of the disclosure.
FIG. 7 is a schematic diagram of a communication system according to an embodiment of the disclosure.
FIG. 8 is a flowchart of a method for network device management according to an embodiment of the disclosure.
FIG. 9 is a diagram of sending a sensing support identifier according to an embodiment of the disclosure.
FIG. 10 is a diagram of sending a sensing support identifier according to an embodiment of the disclosure.
FIG. 11 is a diagram of sending a sensing support identifier according to an embodiment of the disclosure.
FIG. 12 is a block diagram of an apparatus for network device management according to an embodiment of the disclosure.
FIG. 13 is a block diagram of an apparatus for network device management according to an embodiment of the disclosure.
FIG. 14 is a block diagram of an apparatus for network device management according to an embodiment of the disclosure.
FIG. 15 is a block diagram of an apparatus for network device management according to an embodiment of the disclosure.
FIG. 16 is a schematic diagram of a communication device provided by an embodiment of the disclosure.
FIG. 17 is a schematic diagram of a chip provided by an embodiment of the disclosure.

### DETAILED DESCRIPTION

Embodiments of the disclosure are described in detail below, examples of which are shown in the accompanying drawings, in which the same or similar reference numbers throughout represent the same or similar elements or elements having the same or similar functions. The embodiments described below with reference to the accompanying drawings are exemplary and are intended to be used to explain the disclosure, but should not be construed as limiting the disclosure.

With rapid development of wireless sensing technologies and mobile communication technologies, technology combination of the sensing technologies for information acquisition and the communication technologies for information transfer is inevitable in future communication network development. A fifth generation (5G) system based on the 3rd Generation Partnership Project (3GPP) standard provides sensing and communication functions, in which the sensing ability is provided by the 5G new radio (NR) wireless communication system and infrastructure as used for communication, and can be used for communication-assisted sensing or sensing-assisted communication, so that they can be widely applied in various scenarios and fields, such as transportation, aviation, smart cities, and smart homes. For example, sensing of information related to communication channels or environments can be used to improve communication services of the 5G system itself, and the information sensing can be used to assist in radio resource management, interference mitigation, beam management, mobility, etc.

Sensing of the wireless communication channels and environments can further improve performance of the communication system. Some examples of sensing-assisted communication scenarios include:
sensing a location and channel environment of a user equipment (UE), narrowing a beam scanning range and shortening a beam training duration;
sensing a position, speed, movement trajectory and channel environment of a UE for beam prediction, reducing an overhead of beam measurement and a delay of beam tracking; or
sensing attributes of a UE and channel environment to improve performance of channel estimation.

A tracking area (TA) is a concept set by a long term evolution (LTE) system for UE location management. In a LTE network, entire network coverage is divided into several TAs. One TA contains wireless network coverage of one or more radio access network (RAN) base stations. A TA ID (TAI) consists of a public land mobile network (PLMN) and a TA code (TAC). The core network can know a TA where the UE is located when the UE is in an idle state, and pages the UE in all cells of the TA to which the UE is registered when a data service is required.

Multiple TAs form a TA list, and the TA list is allocated to the UE. When the UE moves in the TAs included the TA list, it does not need to perform TA updating, and thus frequent interaction with the network is reduced. When the UE enters a new TA that is not included in the registered TA list, it needs to perform the TA updating. With the TA, the core network can find the UE quickly under an affordable network overhead.

When the UE is in a TA having the sensing ability, it is enabled to use a communication service with the sensing function provided by the communication system. For example, a remote health monitoring system can monitor the personnel, medicines, and diagnostic situations in a medical facility to play a medical assistance role; environmental monitoring and protection can be achieved by monitoring and issuing warnings for polar regions, volcanoes, oceans, forests, etc.; a smart homes is assisted to provide smarter application scenarios; an intrusion monitoring system is set up to ensure safety of a range that is being monitored.

In order to enable the UE to use the communication service with the sensing function, it is required to obtain and configure information that a network device having the sensing ability for the UE. For a communication system with the sensing ability, how to configure a list of the network device having the sensing ability for the UE has not yet been solved.

Therefore, the disclosure proposes a method for network device management and an apparatus for network device management, and thus provides a solution that a core network element obtains the sensing ability of the network device node, so that the core network element can configure the list of the network device having the sensing ability for the UE, and thus the UE is enabled to use the communication service with the sensing function.

A method for network device management and an apparatus for network device management provided in the disclosure are described in detail below with reference to the accompanying drawings.

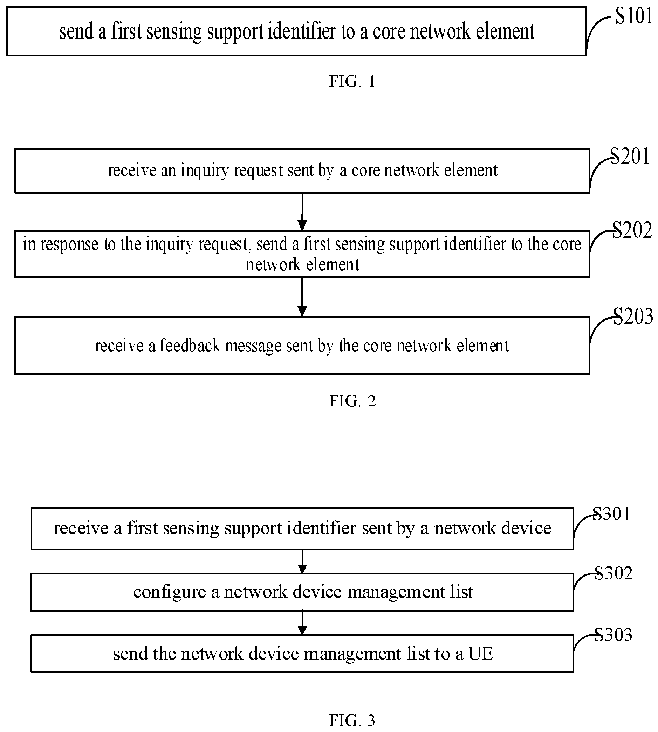

FIG. 1 is a flowchart of a method for network device management according to an embodiment of the disclosure. The method is performed by a network device. In the embodiments of the disclosure, the method provided by the disclosure can be used for 5G mobile communication technologies and future communication technologies, such as 5G-advanced mobile communication technologies and Sixth Generation (6G) mobile communication technologies, which is not limited in the disclosure. The network device described in the disclosure may be a base station based on the above communication technologies. Taking the 5G scenario as an example, the network device may be a NG-RAN node, such as a gNB or ng-eNB, where gNB can be used for independent networking and ng-eNB can be used for backward compatibility with a 4G network to adapt to application requirements of different core networks. The specific usage instance depends on the application scenario, which will not be limited herein.

As illustrated in FIG. 1, the method includes the following steps.

At step S101, a first sensing support identifier is sent to a core network element.

The first sensing support identifier is used to indicate that the network device supports a sensing function and to assist the core network element to configure a network device management list. The network device management list includes a TA corresponding to the network device that supports the sensing function. In other words, the sensing support identifier may be a set of specific data used to indicate that the device has the sensing ability during the communication.

The core network element described in the embodiments of the disclosure may be a network element in a 5G core network, or a network element in a core network based on future communication technologies. Taking the 5G core network as an example, the core network element described in the disclosure may be an access and mobility management function (AMF), or any other network element that can obtain information that the network device has the sensing ability and configure the network device management list for a UE, which is not limited in the disclosure.

In an embodiment of the disclosure, the network device sends the information to the core network element, to assist the core network element in configuring the network device management list for the UE. The information sent by the network device to the core network element at least includes the identifier indicating that the network device supports the sensing function. It is understood that not all network devices on the network side have the sensing ability, a network device with the sensing function may actively send the first sensing support identifier to the core network element, or passively send the first sensing support identifier in response to a request sent by the core network element, which is not limited in the disclosure.

In an implementation of the disclosure, the first sensing support identifier may be carried in a communication message sent by the network device to the core network element, and the type of the communication message is not limited in the embodiments of the disclosure.

It is understood that the first sensing support identifier may be "null" or "valid", which indicates whether the network device supports the sensing function. For example, if a network device sends a first sensing support identifier, i.e., the first sensing support identifier has a certain value and is "valid", it indicates that the network device has the sensing ability (or supports the sensing function). If a network device does not send the first sensing support identifier, i.e., the first sensing support identifier has no value and is "null", it indicates that the network device does not have the sensing ability. For the core network element, whether the network device has the sensing ability or not may be determined by determining whether the first sensing support identifier is received or not.

In an optional embodiment, the first sensing support identifier may indicate that the network device supports the sensing function by a value of "0" or "1". For example, if the network device sends the first sensing support identifier with the value of " 1", it indicates that the network device has the sensing ability (or supports the sensing function). If the network device sends the first sensing support identifier with the value of "0", it indicates that the network device does not have the sensing ability. For the core network element, it may determine whether the network device has the sensing ability or not through receiving the first sensing support identifier and determining the value of the received first sensing support identifier. It should be understood that the above values are only examples and should not be construed as limiting the disclosure.

The core network element can obtain the information that the network device supports the sensing function, and configures a list of the network device that supports the sensing function. The list can be provided to the UE having the sensing ability to perform sensing (such as intrusion detection, etc.) in a network environment (area) that support the sensing.

In conclusion, according to the method for network device management provided by the disclosure, the network device sends the first sensing support identifier to the core network element. The first sensing support identifier is used to indicate that the network device supports the sensing function and to assist the core network element to configure the network device management list. The network device management list includes the TA corresponding to the network device that supports the sensing function. In this way, the core network element obtains the information of the network device having the sensing ability, and configures the network device management list, so that the UE is enabled to use a communication service with the sensing function.

Based on the embodiment shown in FIG. 1, FIG. 2 is a flowchart of a method for network device management according to an embodiment of the disclosure. The method is performed by a network device. As illustrated in FIG. 2, the method includes the following steps.

At step S201, an inquiry request sent by a core network element is received.

The inquiry request is used to inquire whether the network device supports a sensing function.

In the embodiments of the disclosure, the above step S201 is an optional step. The network device with the sensing function may actively send the first sensing support identifier to the core network element, or passively send the first sensing support identifier in response to a request of the core network element.

It is understood that in the embodiments of the disclosure, the core network element is understood as a network element having the sensing ability, which means that a network element not having the sensing ability does not send an inquiry request to the network device.

In another implementation, the core network element may send the inquiry request to the network device regardless of whether the core network element has the sensing ability. That is, even for the core network element not having the sensing ability, it may send the inquiry request to the network device.

At step S202, in response to the inquiry request sent by the core network element, a first sensing support identifier is sent to the core network element.

The first sensing support identifier is used to indicate that the network device supports a sensing function and to assist the core network element to configure a network device management list. The network device management list includes a TA corresponding to the network device that supports the sensing function.

In the disclosure, after receiving the inquiry request sent by the core network element, the network device may send the first sensing support identifier to the core network element as a response, to provide information on whether the network device supports the sensing function. As described in the embodiment of FIG. 1, if the network device has the sensing ability, the first sensing support identifier is sent to the core network element in response to the query request of the core network element, and its value may be any value, and the core network element determines that the network device has the sensing ability as long as it receives the value. Alternatively, the value is a specific value, for example, "1", which indicates that the network device has the sensing ability, in this case, the core network element needs to determine whether the value indicates that the network device has the sensing ability after receiving the value. Correspondingly, if the network device does not have the sensing ability, the network device does not send any message to the core network element in response to the query request of the core network element, and the core network element determines that the network device does not have the sensing ability as long as it does not receive the first sensing support identifier. Alternatively, the network device sends the first sensing support identifier to the core network element, and the first sensing support identifier indicates a specific value, for example, "0", which indicates that the network device does not have the sensing ability, and the core network element needs to determine whether the value indicates that the network device has the sensing ability after receiving the value.

In an embodiment of the disclosure, the network device may send the first sensing support identifier to the core network element through different carriers.

For example, the network device sends the first sensing support identifier to the core network element through a network connection setup request message (NG SETUP REQUEST message). In detail, a NG-RAN node sends the NG SETUP REQUEST message including appropriate data to an AMF to inform the AMF that the node has the sensing ability. The NG SETUP REQUEST message includes a sensing support identifier that indicates that the NG-RAN node supports sensing.

For another example, the network device sends the first sensing support identifier to the core network element through a network configuration update request message (i.e., RAN CONFIGURATION UPDATE message). In detail, the NG-RAN node sends the RAN CONFIGURATION UPDATE message to the AMF to inform the AMF that it has the sensing ability. The message includes a set of appropriate updated configuration data that the node has just put into use, which includes the sensing support identifier indicating that the NG-RAN node supports sensing. As an example, the network node previously does not have the sensing ability, for example, a base station before R18 cannot receive a signal transmitted by itself, and thus it cannot sense external environment and lacks the sensing ability, after updating or upgrading, for example, to R19, the base station supports the sensing function and puts a set of appropriate updated configuration data into use, and thus it acquires the sensing ability and can send sensing support identifier to the AMF through the configuration update message.

For another example, the network device sends the first sensing support identifier to the core network element through an initial UE message (i.e., INITIAL UE MESSAGE). In detail, the NG-RAN node sends the INITIAL UE MESSAGE to the AMF to inform the AMF that it has the sensing ability. It is understood that the NG-RAN node should assign a unique RAN UE NGAP ID to the UE, and include this ID in the INITIAL UE MESSAGE. If the NG-RAN node supports sensing, the sensing support identifier may be included in the INITIAL UE MESSAGE and sent to the AMF.

At step S203, a feedback message sent by the core network element is received.

The feedback message includes a second sensing support identifier, which is used to indicate that the core network element supports the sensing function.

In an embodiment of the disclosure, the core network element is understood as a network element with the sensing ability, which indicates that a network element not having the sensing ability will not start the procedure described in the solution.

In another embodiment, the procedure described in the solution can be started regardless of whether the core network element has the sensing ability, but when the core network element sends the feedback message to the network device, if the core network element does not have the sensing ability, the procedure is interrupted.

In an embodiment of the disclosure, the network device receiving the feedback message sent by the core network element includes: when the first sensing support identifier is sent through the network connection setup request message (NG SETUP REQUEST message), receiving a network connection setup response message (NG SETUP RESPONSE message) sent by the core network element; or, when the first sensing support identifier is sent through the network configuration update request message (RAN CONFIGURATION UPDATE message), receiving the network configuration update acknowledgement message (RAN CONFIGURATION UPDATE ACKNOWLEDGE message) sent by the core network element.

Corresponding to the above examples, for example, when the NG-RAN node sends the NG SETUP REQUEST message including appropriate data to the AMF to inform the AMF that it has the sensing ability, the AMF responds with the NG SETUP RESPONSE message including appropriate data, which includes the sensing support identifier for indicating that the AMF supports sensing.

For another example, when the NG-RAN node sends the RAN CONFIGURATION UPDATE message to the AMF to inform the AMF that it has a sensing ability, the AMF responds with the RAN CONFIGURATION UPDATE ACKNOWLEDGE message to confirm that the AMF has successfully updated configuration data, which includes the sensing support identifier for indicating that the AMF supports sensing.

It is understood that the above step 203 is an optional step, which means that when the network device sends the first sensing support identifier to the core network element by an initial UE message (INITIAL UE MESSAGE), the core network element does not need to feed back a message to the network device.

In conclusion, according to the method for network equipment management provided by the disclosure, the network device receives the inquiry request sent by the core network element, in which the inquiry request is used to inquire whether the network device supports the sensing function. In response to the inquiry request sent by the core network element, the network device sends the first sensing support identifier to the core network element, in which the first sensing support identifier is used to indicate that the network device supports the sensing function and to assist the core network element to configure the network device management list. The network device management list includes the TA corresponding to the network device that supports the sensing function. The network device receives the feedback message sent by the core network element, in which the feedback message includes the second sensing support identifier, which is used to indicate that the core network element supports the sensing function and to assist the core network device to configure the network device management list, so as to provide a communication service with the sensing function to the UE.

FIG. 3 is a flowchart of a method for network device management according to an embodiment of the disclosure. The method is performed by a core network element, which may be a network element in a 5G core network or a network element in a core network based on future communication technologies. Taking the 5G core network as an example, the core network element in the disclosure may be an AMF, or any other network element that can obtain the information of the network device having the sensing ability and configure a network device management list for the UE, which is not limited in the disclosure.

As illustrated in FIG. 3, the method includes the following steps.

At step S301, a first sensing support identifier sent by a network device is received.

The first sensing support identifier is used to indicate that the network device supports a sensing function.

In the embodiments of the disclosure, the solution provided by the disclosure can be used for 5G mobile communication technologies and future communication technologies, such as 5G-advanced or 6G mobile communication technologies, which is not limited in the disclosure. The network device described in the disclosure may be a base station based on the above communication technologies. Taking the 5G scenario as an example, the network device may be a NG-RAN node, such as a gNB or an ng-eNB, where the gNB can be used for independent networking, and the ng-eNB can be used for backwards compatibility with 4G networks to adapt to application requirements of different core networks. The specific usage instance depends on the application scenario, which is not limited here.

In an implementation of the disclosure, the first sensing support identifier may be carried in a communication message sent by the network device to the core network element, and the type of the communication message is not limited in the embodiments.

It is understood that the first sensing support identifier may be "null" or "valid", which indicates whether the network device supports the sensing function. For example, if a network device sends a first sensing support identifier, i.e., the first sensing support identifier has a certain value and is "valid", it indicates that the network device has the sensing ability (or supports the sensing function). If a network device does not send the first sensing support identifier, i.e., the first sensing support identifier has no value and is "null", it indicates that the network device does not have the sensing ability. For the core network element, whether the network device has the sensing ability or not may be determined by determining whether the first sensing support identifier is received or not.

In an optional embodiment, the first sensing support identifier may indicate that the network device supports the sensing function by a value of "0" or "1". For example, if the network device sends the first sensing support identifier with the value of " 1", it indicates that the network device has the sensing ability (or supports the sensing function). If the network device sends the first sensing support identifier with the value of "0", it indicates that the network device does not have the sensing ability. For the core network element, it may determine whether the network device has the sensing ability or not through receiving the first sensing support identifier and determining the value of the received first sensing support identifier. It should be understood that the above values are only examples and should not be construed as limiting the disclosure.

At step S302, a network device management list is configured.

The network device management list includes a TA corresponding to the network device that supports the sensing function.

In an embodiment of the disclosure, the core network element obtains the information of the network device having the sensing ability from the network device, and uses the information as assistance information for configuring the network device management list. In detail, the core network element obtains the information of the network device having the sensing ability, such as an ID, configures wireless network coverage of the network device having the sensing ability to the network device management list, such as a TA list, through a mapping relationship between the network device ID and the coverage of the network device, and then provides the list to the UE. The obtained network device management list may include the TA corresponding to the network device that supports the sensing function, and thus the UE can be provided with a sensing service in the TA covered by the network device management list. That is, the UE having the sensing ability can perform sensing (such as intrusion detection, etc.) in the network environment (area) that supports sensing.

At step S303, the network device management list is sent to a UE.

In the embodiments of the disclosure, the core network element considers the sensing abilities of NG-RANs, and configures the network device management list (a TA list), in which all the NG-RAN nodes support sensing and can be used for providing subsequent sensing operations for the UE, such as intrusion detection.

In some embodiments of the disclosure, the core network element may send the network device management list to the UE through an access network. In detail, through the access network (e.g., a base station), the network device management list is sent to the base station, and the base station sends the network device management list to the UE.

It should be noted that the base station through which the core network element sends the network device management list may be a base station having the sensing ability or a base station not having the sensing ability, which is not limited in the disclosure.

In conclusion, according to the method for network device management provided by the disclosure, the core network element receives the first sensing support identifier sent by the network device. The first sensing support identifier is used to indicate that the network device supports the sensing function and to configure the network device management list. The network device management list includes the TA corresponding to the network device that supports the sensing function. In this way, the core network element obtains the information of the network devices having the sensing ability, and configures the network device management list, so as to provide a communication service with the sensing function to the UE.

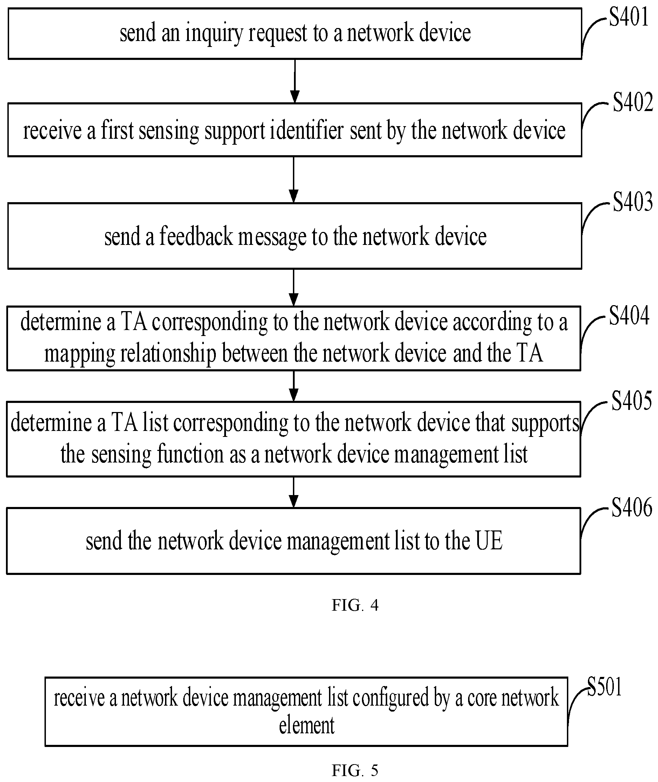

Based on the embodiment shown in FIG. 3, FIG. 4 is a flowchart of a method for network device management according to an embodiment of the disclosure. The method is performed by a core network element. As illustrated in FIG. 4, the method includes the following steps.

At step S401, an inquiry request is sent to a network device.

The inquiry request is used to inquire whether the network device supports a sensing function.

In the embodiments of the disclosure, the above step S401 is an optional step. The network device having the sensing function may actively send the first sensing support identifier to the core network element, and the core network element may passively receive the information; or the core network element may actively query the network device, and then obtains the first sensing support identifier from the network device.

It is understood that in the embodiments of the disclosure, the core network element is understood as a network element having the sensing ability, which indicates that a network element not having the sensing ability does not send the inquiry request to the network device.

In another implementation, a core network element may send the inquiry request to the network device regardless of whether it has the sensing ability. That is, even for a core network element not having the sensing ability, it may send the inquiry request to the network device.

At step S402, a first sensing support identifier sent by the network device is received.

The first sensing support identifier is used to indicate that the network device supports a sensing function.

In an embodiment of the disclosure, receiving the first sensing support identifier sent by the network device includes at least one of: receiving the first sensing support identifier through a network connection setup request message (NG SETUP REQUEST message); receiving the first sensing support identifier through a network configuration update request message (RAN CONFIGURATION UPDATE message); or, receiving the first sensing support identifier by an initial UE message (INITIAL UE MESSAGE).

That is, the core network element may receive the first sensing support identifier sent by the network device through different communication messages (carriers). Its principle is the same as that of the embodiments described in FIGS. 1-2, and will not be repeated here.

At step S403, a feedback message is sent to the network device.

The feedback message includes a second sensing support identifier, and the second sensing support identifier is used to indicate that the core network element supports the sensing function.

In an embodiment of the disclosure, sending the feedback message to the network device includes: sending a network connection setup response message (NG SETUP RESPONSE message) to the network device in response to receiving the first sensing support identifier through the network connection setup request message (NG SETUP REQUEST message); or, sending a network configuration update acknowledgement message (RAN CONFIGURATION UPDATE ACKNOWLEDGE message) to the network device in response to receiving the first sensing support identifier through the network configuration update request message (RAN CONFIGURATION UPDATE message).

In a specific example of the disclosure, if the feedback message sent by the core network element to the network device is in the form of a network connection setup response message (NG SETUP RESPONSE message), a feedback message including specific data may be sent, which includes the sensing support identifier of the core network element. If the feedback message sent by the core network element to the network device is in the form of a network configuration update request message (RAN CONFIGURATION UPDATE message), a feedback message that acknowledges that configuration data has been updated may be sent, which includes the sensing support identifier of the core network element.

At step S404, a TA corresponding to the network device is determined according to a mapping relationship between the network device and the TA.

In an embodiment of the disclosure, each network device has a unique ID, and the TA corresponding to the network device having the sensing ability is determined according to the mapping relationship between the network device and the TA.

In the embodiments of the disclosure, the TA may be a network coverage area including one or more NG-RAN nodes, such as a gNB or an ng-eNB.

In detail, the core network element obtains the information of the network device having the sensing ability, such as an ID, and configures the wireless network coverage of the network device having the sensing ability as the network device management list, such as a TA list, and then provides the list to the UE. The obtained network device management list includes the TA corresponding to the network device that supports the sensing function, and thus the UE can be provided with a sensing service in the TA covered by the network device management list.

At step S405, a TA list corresponding to the network device that supports the sensing function is determined as a network device management list.

In an embodiment of the disclosure, the TA corresponding to the network device that has been determined as having the sensing ability may be recorded as a TA list, i.e., the network device management list. When the UE is in any TA included in the TA list, it is enabled to use a communication service that support the sensing function.

At step S406, the network device management list is sent to the UE.

In conclusion, according to the method for network device management provided by the disclosure, the core network element sends the inquiry request to the network device, in which the inquiry request is used to inquire whether the network device supports the sensing function. The core network element receives the first sensing support identifier sent by the network device, in which the first sensing support identifier is used to indicate that the network device supports a sensing function. The core network element sends the feedback message to the network device, in which the feedback message includes the second sensing support identifier, and the second sensing support identifier is used to indicate that the core network element supports the sensing function. The core network element determines the TA corresponding to the network device according to the mapping relationship between the network device and the TA. According to the mapping relationship between the network device and the TA, the TA corresponding to the network device is determined, so that the core network element can obtain the sensing ability information from the network device, and configure the network device management list according to the information, so that the UE is enabled to use a communication service with the sensing function, thereby improving the communication performance of system.

FIG. 5 is a flowchart of a method for network device management according to an embodiment of the disclosure. As illustrated in FIG. 5, the method is performed by a UE and includes the following steps.

At step S501, a network device management list configured by a core network element is received.

The network device management list includes a TA corresponding to a network device that supports a sensing function.

The UE may receive the network device management list configured by the core network element through a RAN device, which may be a base station, such as a gNB or an ng-eNB.

In an embodiment of the disclosure, the UE may receive the network device management list (TA list) configured by the core network element. In detail, the UE may receive the TA list through a RAN device, such as a network device, which may be a base station with a sensing function or a base station not having a sensing function, which is not limited here.

In an embodiment of the disclosure, the TA list may contain the TA corresponding to the network device that supports the sensing function. When the UE is in any TA of the network device included in the TA list, it may communicate through the network device that supports the sensing function and perform a sensing service based on the communication network.

In conclusion, according to the method for network device management provided by the disclosure, the UE receives the network device management list configured by the core network element through the RAN device. The network device management list includes the TA corresponding to the network device that supports the sensing function. Therefore, the list can be used to assist the core network element to obtain the information of the network device having the sensing ability, and configure the network device management list, so that the UE is enabled to use a communication service with the sensing function.

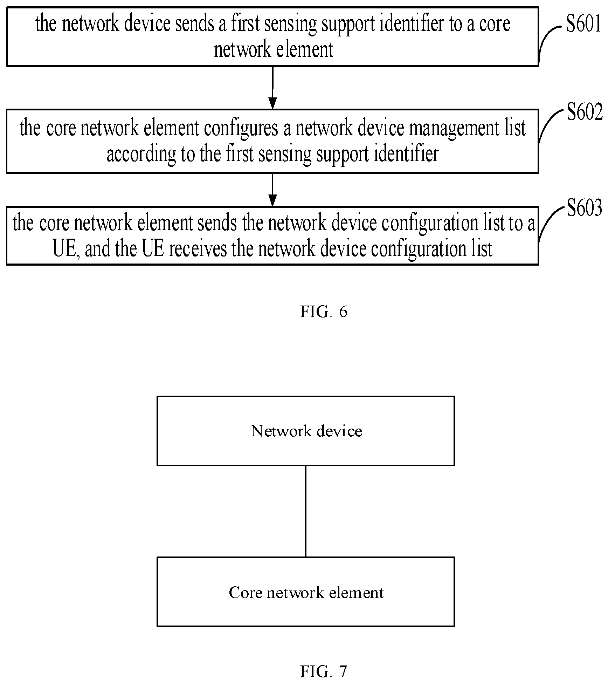

FIG. 6 is a flowchart of a method for network device management according to an embodiment of the disclosure. The method is performed by a communication system. The communication system includes a network device and a core network element.

Before describing the steps of the method in the embodiment, the architecture of the communication system that can implement the solution of the embodiment will be introduced first. FIG. 7 is a schematic diagram of a communication system that is used to implement the solution in the embodiment. As illustrated in FIG. 7, the architecture includes a core network element and a network device. The procedure in which the core network element obtains the information of the network device having the sensing ability and configures the TA list only involves the core network element and the network device. The core network element obtains the information of the network device having the sensing ability. The network device sends the first sensing identifier to the core network element, and the first sensing support identifier is used to indicate that the network device supports the sensing function, so that the core network element may obtain the information of the network device having the sensing ability, and configure the network device management list for the UE. It is understood that the architecture may also include a UE (not shown in FIG. 7). As an instance in which the core network element has configured the TA list, after the core network element obtains the information of the network device having the sensing ability, when the UE has a corresponding sensing service requirement based on communication, the core network element sends the configured network device management list to the UE. The network device management list includes the TA corresponding to the network device that supports the sensing function.

As illustrated in FIG. 6, the method includes the following steps.

At step S601, the network device sends a first sensing support identifier to a core network element.

The first sensing support identifier is used to indicate that the network device supports a sensing function.

At step S602, the core network element configures a network device management list according to the first sensing support identifier.

The network device management list includes a TA corresponding to the network device that supports the sensing function.

At step S603, the core network element sends the network device configuration list to a UE, and the UE receives the network device configuration list.

In an embodiment of the disclosure, the UE receives the network device management list configured by the core network element through an access network (i.e., a network device).

The above steps S601-S603 are executed with reference to the related steps in FIGS. 1-5, and will not be repeated here.

According to the method for network device management provided by the disclosure, the network device sends the first sensing support identifier to the core network element through interaction among the network device, the core network element and the UE. The first sensing support identifier is used to indicate that the network device supports the sensing function. The core network element configures the network device management list according to the first sensing support identifier. The network device management list includes the TA corresponding to the network device that supports the sensing function. The UE receives the network device management list configured by the core network element. The core network element obtains the information of the network device having the sensing ability from the network device, and configures the network device management list according to the information, so that the UE is enabled to use the communication services with the sensing function, thereby improving the communication performance of system.

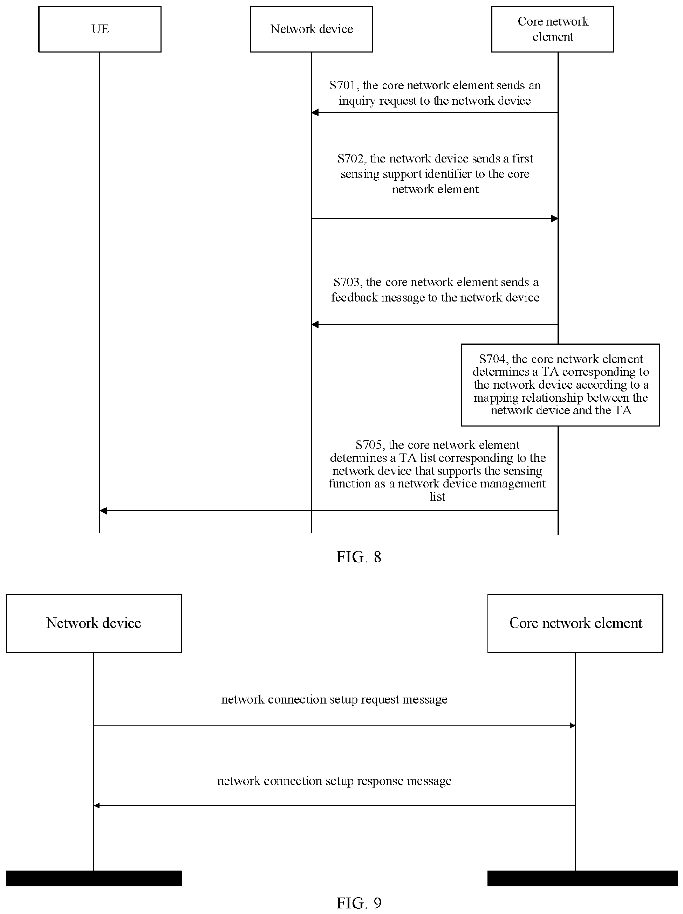

FIG. 8 is a flowchart of a method for network device management according to an embodiment of the disclosure. The method is performed by a communication system. The communication system includes a network device, a core network element and a UE. Based on the embodiment of FIG. 6, as illustrated in FIG. 8, the method includes the following steps.

At step S701, the core network element sends an inquiry request to the network device.

The inquiry request is used to inquire whether the network device supports a sensing function.

As an example, the core network element sends a Sensing_Ability_Request to the network device to inquire whether the network device supports a sensing function.

At step S702, the network device sends a first sensing support identifier to the core network element.

The first sensing support identifier is used to indicate that the network device supports the sensing function.

In an embodiment of the disclosure, the network device sending the first sensing support identifier to the core network element includes at least one of: sending the first sensing support identifier to the core network element through a network connection setup request message (NG SETUP REQUEST message); sending the first sensing support identifier to the core network element through a network configuration update request message (RAN CONFIGURATION UPDATE message); or sending the first sensing support identifier to the core network element through an initial UE message (INITIAL UE MESSAGE).

In an embodiment of the disclosure, the first sensing support identifier sent by the network device to the core network element may be sent through different messages (carriers).

In a specific example of the disclosure, as shown in FIG. 9, when the network device starts a corresponding procedure by sending the network connection setup request message (NG SETUP REQUEST message), the message includes specific data, including the sensing support identifier for indicating that the network device supports sensing.

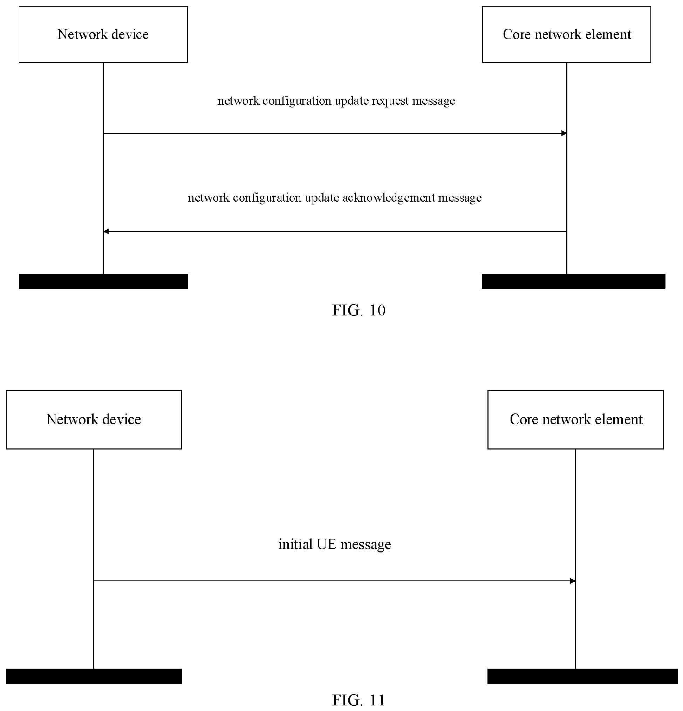

In a specific example of the disclosure, as shown in FIG. 10, when the network device starts a corresponding procedure by sending the network configuration update request message (RAN CONFIGURATION UPDATE message), the message includes a set of specific updated configuration data that has just put into use by the network device, which includes the sensing support identifier for indicating that the network device supports sensing.

In a specific example of the disclosure, as shown in FIG. 11, when the network device starts a corresponding procedure by sending the initial UE message (INITIAL UE MESSAGE), the network device assigns a unique RAN UE NGAP ID to the UE in advance, and the sent message includes the unique ID and the sensing support identifier for indicating that the network device supports sensing.

At step S703, the core network element sends a feedback message to the network device.

The feedback message includes a second sensing support identifier, which is used to indicate that the core network element supports the sensing function.

In an embodiment of the disclosure, sending the feedback message to the network device, includes: in response to receiving the first sensing support identifier via the network connection setup request message (NG SETUP REQUEST message), sending a network connection setup response message (NG SETUP RESPONSE message) to the network device; or in response to receiving the first sensing support identifier via the network configuration update request message (RAN CONFIGURATION UPDATE message), sending a network configuration update acknowledgement message (RAN CONFIGURATION UPDATE ACKNOWLEDGE message) to the network device.

In a specific example of the disclosure, as shown in FIG. 9, if the feedback message sent by the core network element to the network device is in the form of the network connection setup response message (NG SETUP RESPONSE message), a feedback message including specific data may be sent, which includes the sensing support identifier of the core network element.

In a specific example of the disclosure, as shown in FIG. 10, if the feedback message sent by the core network element to the network device is in the form of the network configuration update request message (RAN CONFIGURATION UPDATE message), a feedback message that acknowledges that configuration data has been updated may be sent, which includes the sensing support identifier of the core network element.

At step S704, the core network element determines a TA corresponding to the network device according to a mapping relationship between the network device and the TA.

In an embodiment of the disclosure, a TA may include one or more network devices, each network device has a unique ID, and the TA corresponding to the network device having the sensing ability may be determined according to the mapping relationship between the network device and the TA.

In an embodiment of the disclosure, TA may be a network coverage including one or more NG-RAN nodes such as a gNB or an ng-eNB. When the disclosure is implemented in future mobile communication technologies based on 5G, the TA may also include network coverage of one or more corresponding base stations.

At step S705, the core network element determines a TA list corresponding to the network device that supports the sensing function as a network device management list.

The network device management list includes the TA corresponding to the network device that supports the sensing function.

In an embodiment of the disclosure, the core network element configures the network device management list (TA list), which contains the TA corresponding to the network device that supports the sensing ability, and the network device contained in the TA list supports the sensing ability, so that when the UE is in the TA contained in the TA list, it is enabled to use a communication service that support the sensing function.

In a specific example of the disclosure, the network device may be a NG-RAN node, such as an ng-eNB or a gNB, the core network element may be a 5G core network element, such as an AMF, and the UE may be a portable mobile phone. When the 5G core network needs to configure a TA list that supports the sensing function for the UE, the AMF sends an inquiry request to the NG-RAN through an N2 interface to inquire whether the NG-RAN supports the sensing function. After receiving the inquiry request, the NG-RAN sends a first sensing support identifier to the AMF to indicate a sensing ability of the NG-RAN. The AMF receives the first sensing support identifier and sends a second sensing support identifier to the NG-RAN as a feedback message, to indicate a sensing ability of the AMF. When the AMF obtains information of one or more NG-RAN nodes having the sensing ability, the AMF obtains the TA corresponding to the wireless network coverage corresponding to these NG-RAN nodes according to the mapping relationship, and adds the corresponding TA to the TA list. The TA list is configured for the UE as the network device management list, and the NG-RAN node sends the information to the UE through an N1 interface.

At step S706, the core network element sends the network device management list to the UE, and the UE receives the network device management list.

In conclusion, according to the embodiment described in this disclosure, the AMF considers the sensing abilities of NG-RANs when configuring the TA list that can be used for sensing for UE, that is, all the NG-RAN nodes included in the TA list support sensing. Therefore, the technical solution of the disclosure has the beneficial effect that the AMF can obtain the sensing ability of NG-RAN for subsequent sensing operations, such as configuring the TA list for a UE having a sensing requirement.

In the above embodiments of the disclosure, the methods of the embodiments of the disclosure are introduced from the perspectives of the network device and the UE respectively. In order to realize the functions in the method provided by the embodiment of the disclosure, the network device and the UE may include a hardware structure and a software module, and realize the above functions in the form of a hardware structure, a software module, or a combination of the hardware structure and the software module. One of the above functions can be implemented in a hardware structure, a software module, or a combination of hardware structure and software module. A certain function of the above-described functions may be performed in the form of a hardware structure, a software module, or a combination of the hardware structure and the software module.

Corresponding to the method for network device management provided in the above embodiments, the disclosure also provides an apparatus for network device management. Since the apparatus for network device management provided in this embodiment of the disclosure corresponds to the method for network device management provided in the above embodiments, the implementations of the method for network device management are also applicable to the apparatus for network device management provided in this embodiment, and will not be described in detail in this embodiment.

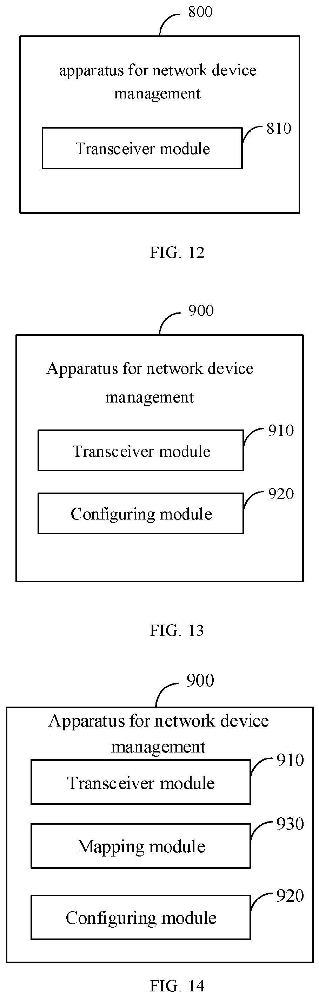

FIG. 12 is a block diagram of an apparatus for network device management 800 according to an embodiment of the disclosure. The apparatus for network device management 800 is applied to a network device.

As illustrated in FIG. 12, the apparatus includes: a transceiver module 810, configured to send a first sensing support identifier to a core network element, in which the first sensing support identifier is used to indicate that the network device supports a sensing function and to assist the core network element to configure a network device management list, and the network device management list includes a TA corresponding to the network device that supports the sensing function.

According to the apparatus for network device management provided by the disclosure, the network device sends the first sensing support identifier to the core network element, in which the first sensing support identifier is used to indicate that the network device supports a sensing function and assist the core network element to configure a network device management list. The network device management list includes a TA corresponding to the network device that supports the sensing function. Therefore, the network device assists the core network element to configure the network device management list for the UE, so that the UE is enabled to use the communication services with the sensing function, thereby improving the communication performance of system.

In some embodiments, the transceiver module 810 is further configured to: receive an inquiry request sent by the core network element, in which the inquiry request is used to inquire whether the network device supports the sensing function; in response to the inquiry request, send the first sensing support identifier to the core network element, in which the first sensing support identifier is used to indicate that the network device supports a sensing function and assist the core network element to configure a network device management list, and the network device management list includes a TA corresponding to the network device that supports the sensing function; and receive a feedback message sent by the core network element, in which the feedback message includes a second sensing support identifier, and the second sensing support identifier is used to indicate that the core network element supports the sensing function.

In some embodiments, the network device sending the first sensing support identifier to the core network element includes at least one of: sending the first sensing support identifier to the core network element through a network connection setup request message (NG SETUP REQUEST message); sending the first sensing support identifier to the core network element through a network configuration update request message (RAN CONFIGURATION UPDATE message); or sending the first sensing support identifier to the core network element through an initial UE message (INITIAL UE MESSAGE).

In some embodiments, the network device receiving the feedback message sent by the core network element includes: when the first sensing support identifier is sent through a network connection setup request message (NG SETUP REQUEST message), receiving a network connection setup response message (NG SETUP RESPONSE message) sent by the core network element; or, when the first sensing support identifier is sent through a network configuration update request message (RAN CONFIGURATION UPDATE message), receiving a network configuration update acknowledgement message (RAN CONFIGURATION UPDATE ACKNOWLEDGE message) sent by the core network element.

In conclusion, according to the apparatus for network device management provided by the disclosure, the network device receives the inquiry request sent by the core network element, in which the inquiry request is used to inquire whether the network device supports the sensing function. In response to the inquiry request sent by the core network element, the network device sends the first sensing support identifier to the core network element, in which the first sensing support identifier is used to indicate whether the network device supports the sensing function and to assist the core network element to configure a network device management list. The network device management list includes the TA corresponding to the network device that supports the sensing function. The network device receives the feedback message sent by the core network element, in which the feedback message includes the second sensing support identifier, which is used to indicate that the core network element supports the sensing function and to assist the core network element to configure the network equipment management list, so that the UE is enabled to use a communication service with the sensing function, thereby improving the communication performance of system.

FIG. 13 is a block diagram of an apparatus for network device management 900 according to an embodiment of the disclosure. The apparatus for network device management 900 may be applied to a core network element.

As illustrated in FIG. 13, the apparatus 900 includes: a transceiver module 910, configured to receive a first sensing support identifier sent by a network device, in which the first sensing support identifier is used to indicate that the network device supports a sensing function; and a configuring module 920, configured to configure a network device management list, in which the network device management list includes a TA corresponding to the network device that supports the sensing function; and the transceiver module 910, further configured to send the network device management list to a UE.

According to the apparatus for network device management provided by the disclosure, the core network element receives the first sensing support identifier sent by the network device, in which the first sensing support identifier is used to indicate that the network device supports the sensing function. The core network element configures the network device management list, in which the network device management list includes the TA corresponding to the network device that supports the sensing function, so that the network device can assist the core network element to configure the network device management list, and the UE is enabled to use a communication service with the sensing function, thereby improving the communication performance of system.

As illustrated in FIG. 14, in some embodiments, the apparatus 900 further includes a mapping module 930, configured to determine a TA corresponding to the network device according to a mapping relationship between the network device and the TA.

In some embodiments, the transceiver module 910 is further configured to: send an inquiry request to the network device, in which the inquiry request is used to inquire whether the network device supports the sensing function; send a feedback message to the network device, in which the feedback message includes a second sensing support identifier, and the second sensing support identifier is used to indicate that the core network element supports a sensing function; and determine a TA list corresponding to the network device that supports the sensing function as a network device management list.

In an embodiment of the disclosure, receiving the first sensing support identifier sent by the network device includes at least one of: receiving the first sensing support identifier through a network connection setup request message (NG SETUP REQUEST message); receiving the first sensing support identifier through a network configuration update request message (RAN CONFIGURATION UPDATE message); or, receiving the first sensing support identifier by an initial UE message (INITIAL UE MESSAGE).

In an embodiment of the disclosure, sending the feedback message to the network device includes: sending a network connection setup response message (NG SETUP RESPONSE message) to the network device in response to receiving the first sensing support identifier through the network connection setup request message (NG SETUP REQUEST message); or, sending a network configuration update acknowledgement message (RAN CONFIGURATION UPDATE ACKNOWLEDGE message) to the network device in response to receiving the first sensing support identifier through the network configuration update request message (RAN CONFIGURATION UPDATE message).

In an embodiment of the disclosure, a TA may contain one or more network devices, and one network device may only be in one TA and has a unique ID. According to the mapping relationship between the network device and the TA, the TA corresponding to the network device having the sensing ability may be determined.

In an embodiment of the disclosure, the TA may be a network coverage area including one or more NG-RAN nodes, such a gNB or an ng-eNB.

In an embodiment of the disclosure, the TA corresponding to the network device that has been determined as having the sensing ability may be recorded as a TA list, which can also acts as a network device management list. When the UE is in the TA included in the TA list, it is enabled to use a communication service supporting the sensing function.

In conclusion, according to the method for network device management in the disclosure, the core network element sends the inquiry request to the network device, in which the inquiry request is used to inquire whether the network device supports the sensing function. The core network element receives the first sensing support identifier sent by the network device, in which the first sensing support identifier is used to indicate that the network device supports the sensing function. The core network element sends the feedback message to the network device, in which the feedback message includes the second sensing support identifier, and the second sensing support identifier is used to indicate that the core network element supports the sensing function. According to the mapping relationship between the network device and the TA, the TA corresponding to the network device is determined, so that the core network element can obtain the sensing ability information from the network device and configure the network device management list under the assistance of the information, and the UE is enabled to use the communication services with the sensing function, thereby improving the communication performance of system.

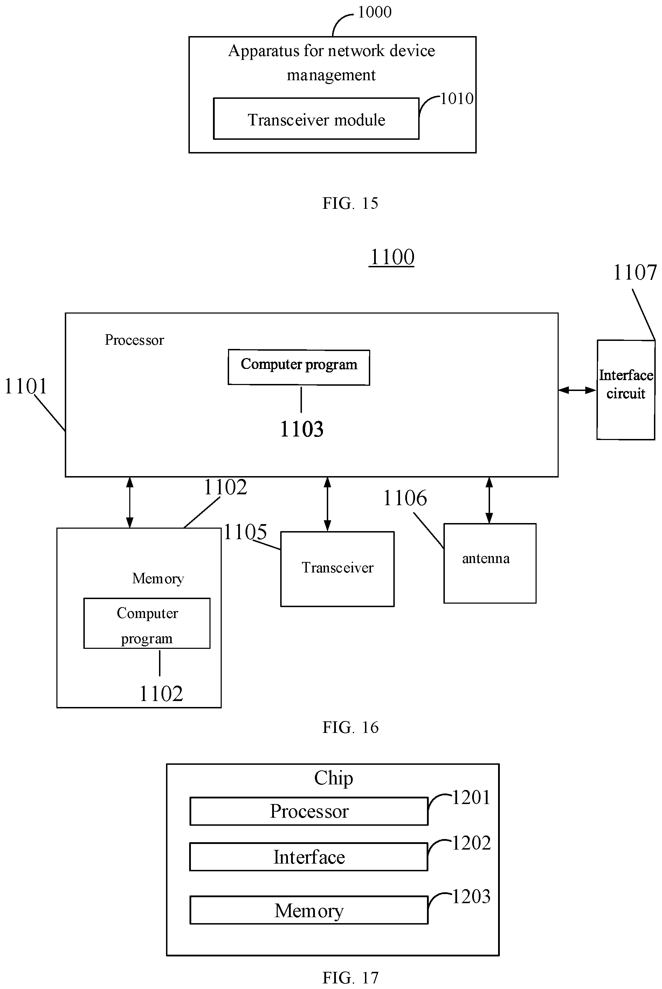

FIG. 15 is a schematic diagram of an apparatus for network device management 1000 provided by an embodiment of the disclosure. The apparatus for network device management 1000 is applicable to a UE.

As illustrated in FIG. 15, the apparatus 1000 includes: a transceiver module 1010, configured to receive a network device management list configured by a core network element, in which the network device management list includes a TA corresponding to a network device that supports a sensing function.

According to the apparatus for network device management provided by the disclosure, the UE receives the network device management list configured by the core network element. The network device management list includes the TA corresponding to the network device that supports the sensing function, so that the network device can assist the core network element to configure the network device management list, to provide the UE with a communication service with the sensing function, thereby improving the communication performance of system.

The embodiments of the disclosure also provide a communication system, which includes the apparatus shown in FIGS. 8-11.

FIG. 16 is a schematic diagram of a communication device 1100 provided by an embodiment of the disclosure. The communication device 1100 may be a network device or a UE, or may be a chip, a chip system or a processor that supports the network device to realize the above-described methods, or may be a chip, a chip system or a processor that supports the UE to realize the above-described methods. The device may be used to realize the methods described in the above method embodiments with reference to the description of the above-described method embodiments.

The communication device 1100 may include one or more processors 1101. The processor 1101 may be a general purpose processor or a dedicated processor, such as, a baseband processor and a central processor. The baseband processor is used for processing communication protocols and communication data. The central processor is used for controlling the communication device (e.g., a base station, a baseband chip, a terminal, a terminal chip, a central unit (CU) or a distributed unit (DU)), executing computer programs, and processing data of the computer programs.

Optionally, the communication device 1100 may include one or more memories 1102 on which a computer program 1104 may be stored. The processor 1101 executes the computer program 1104 to cause the communication device 1100 to perform the methods described in the above method embodiments. Optionally, the memory 1102 may also store data. The communication device 1100 and the memory 1102 may be provided separately or may be integrated together.

Optionally, the communication device 1100 may also include a transceiver 1105 and an antenna 1106. The transceiver 1105 may be referred to as transceiver unit, transceiver machine, or transceiver circuit, for realizing a transceiver function. The transceiver 1105 may include a receiver and a transmitter. The receiver may be referred to as receiving machine or receiving circuit, for realizing a receiving function. The transmitter may be referred to as transmitter machine or transmitting circuit, for realizing a transmitting function.

Optionally, the communication device 1100 may also include one or more interface circuits 1107. The interface circuits 1107 are used to receive code instructions and transmit the code instructions to the processor 1101. The processor 1101 runs the code instructions to cause the communication device 1100 to perform the methods described in the method embodiments.

In an implementation, the processor 1101 may include a transceiver for implementing the receiving and sending functions. The transceiver may be, for example, a transceiver circuit, an interface, or an interface circuit. The transceiver circuit, the interface, or the interface circuit for implementing the receiving and sending functions may be separated or may be integrated together. The transceiver circuit, the interface, or the interface circuit described above may be used for reading and writing code/data, or may be used for signal transmission or delivery.

In an implementation, the processor 1101 may store a computer program 1103. When the computer program 1103 runs on the processor 1101, the communication device 1100 is caused to perform the methods described in the method embodiments above. The computer program 1103 may be solidified in the processor 1101, and in such case the processor 1101 may be implemented by hardware.

In an implementation, the communication device 1100 may include circuits. The circuits may implement the sending, receiving or communicating function in the above method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the description of the above embodiments may be a network device or a UE, but the scope of the communication device described in the disclosure is not limited thereto, and the structure of the communication device may not be limited by FIG. 16. The communication device may be a stand-alone device or may be part of a larger device. For example, the communication device may be:
(1) a stand-alone IC, a chip, a chip system or a subsystem;
(2) a collection of ICs including one or more ICs, optionally, the collection of ICs may also include storage components for storing data and computer programs;
(3) an ASIC, such as a modem;
(4) a module that can be embedded within other devices;
(5) a receiver, a terminal, a smart terminal, a cellular phone, a wireless device, a handheld machine, a mobile unit, an in-vehicle device, a network device, a cloud device, an artificial intelligence device, and the like; and
(6) others.

The case that the communication device may be a chip or a chip system can be referred to the schematic diagram of the chip shown in FIG. 17. The chip shown in FIG. 17 includes a processor 1201 and an interface 1202. There may be one or more processors 1201, and there may be multiple interfaces 1202.

Optionally, the chip also includes a memory 1203 for storing necessary computer programs and data.

It is understood by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be understood as beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, the above embodiments may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., using coaxial cables, fiber optics, or digital subscriber lines (DSLs) or wireless manner (e.g., using infrared wave, wireless wave, or microwave). The computer-readable storage medium may be any usable medium to which the computer is capable to access or a data storage device such as a server integrated by one or more usable mediums and a data center. The usable medium may be a magnetic medium (e.g., a floppy disk, a hard disk, and a tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or used to indicate the order of precedence.

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

As used herein, the term "machine-readable medium" or "computer-readable medium" refers to any computer program product, apparatus, and/or device (e.g., disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or a computing system that includes any combination of such background components, middleware components, or front-end components. The components of the system may be interconnected by any form or medium of digital data communication (e.g., communication network), such as a Local Area Network (LAN), a Wide Area Network (WAN), and the Internet.

The computer system may include a client and a server. The client and server are generally remote from each other and interacting through a communication network. The client - server relation is generated by computer programs running on the respective computers and having a client-server relation with each other.

It is understandable that steps can be reordered, added or deleted using various forms of the processes shown above. For example, the steps in the disclosure may be performed in parallel or sequentially or in different orders, as long as the desired result of the technical solution disclosed in the disclosure is achieved, which is not limited herein.

It should be understood that various embodiments described in the disclosure may be implemented individually or together with other embodiments without affecting the implementation of the solution.

Those skilled in the art may realize that units and algorithmic steps of the various examples described in the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described function for each particular application, but such implementation should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclo sed by the disclosure, which shall be covered by the scope of protection of the disclosure. Therefore, the scope of protection of the disclosure shall be governed by the scope of protection of the attached claims.

## Claims

1. A method for network device management, performed by a network device, comprising:
sending a first sensing support identifier to a core network element, wherein the first sensing support identifier is used to indicate that the network device supports a sensing function and to assist the core network element to configure a network device management list;
wherein the network device management list comprises a tracking area corresponding to the network device that supports the sensing function.

2. The method of claim 1, wherein sending the first sensing support identifier to the core network element comprises at least one of:
sending the first sensing support identifier to the core network element via a network connection setup request message;
sending the first sensing support identifier to the core network element via a network configuration update request message; or
sending the first sensing support identifier to the core network element via an initial user equipment message.

3. The method of claim 2, further comprising:
receiving a feedback message sent by the core network element, wherein the feedback message comprises a second sensing support identifier, and the second sensing support identifier is used to indicate that the core network element supports the sensing function.

4. The method of claim 3, wherein receiving the feedback message sent by the core network element comprises:
in response to sending the first sensing support identifier via the network connection setup request message, receiving a network connection setup response message sent by the core network element; or
in response to sending the first sensing support identifier via the network configuration update request message, receiving a network configuration update acknowledgement message sent by the core network element.

5. The method of any one of claims 1-4, wherein before sending the first sensing support identifier to the core network element, the method further comprises:
receiving an inquiry request sent by the core network element, wherein the inquiry request is used to inquire whether the network device supports the sensing function; and
sending the first sensing support identifier to the core network element comprises:
in response to the inquiry request, sending the first sensing support identifier to the core network element.

6. A method for network device management, performed by a core network element, comprising:
receiving a first sensing support identifier sent by a network device, wherein the first sensing support identifier is used to indicate that the network device supports a sensing function;
configuring a network device management list, wherein the network device management list comprises a tracking area corresponding to the network device that supports the sensing function; and
sending the network device management list to a user equipment (UE).

7. The method of claim 6, wherein receiving the first sensing support identifier sent by the network device comprises at least one of:
receiving the first sensing support identifier via a network connection setup request message;
receiving the first sensing support identifier via a network configuration update request message; or
receiving the first sensing support identifier via an initial user equipment message.

8. The method of claim 7, further comprising:
sending a feedback message to the network device, wherein the feedback message comprises a second sensing support identifier, and the second sensing support identifier is used to indicate that the core network element supports the sensing function.

9. The method of claim 8, wherein sending the feedback message to the network device comprises:
in response to receiving the first sensing support identifier via the network connection setup request message, sending a network connection setup response message to the network device; or
in response to receiving the first sensing support identifier via the network configuration update request message, sending a network configuration update acknowledgement message to the network device.

10. The method of any one of claims 6-9, wherein before receiving the first sensing support identifier sent by the network device, the method further comprises:
sending an inquiry request to the network device, wherein the inquiry request is used to inquire whether the network device supports the sensing function.

11. The method of any one of claims 6-10, wherein configuring the network device management list comprises:
determining a tracking area corresponding to the network device according to a mapping relationship between the network device and the tracking area; and
determining a tracking area list corresponding to the network device that supports the sensing function as the network device management list.

12. A method for network device management, performed by a user equipment (UE), comprising:
receiving a network device management list configured by a core network element, wherein the network device management list comprises a tracking area corresponding to a network device that supports a sensing function.

13. A method for network device management, comprising:
sending, by a network device, a first sensing support identifier to a core network element, wherein the first sensing support identifier is used to indicate that the network device supports a sensing function;
configuring, by the core network element, a network device management list according to the first sensing support identifier, wherein the network device management list comprises a tracking area corresponding to the network device that supports the sensing function; and
receiving, by a user equipment (UE), the network device management list configured by the core network element.

14. A network device, comprising:
a transceiver module, configured to send a first sensing support identifier to a core network element,
wherein the first sensing support identifier is used to indicate that the network device supports a sensing function and to assist the core network element to configure a network device management list, and the network device management list comprises a tracking area corresponding to the network device that supports the sensing function.

15. A core network element, comprising:
a transceiver module, configured to receive a first sensing support identifier sent by a network device, wherein the first sensing support identifier is used to indicate that the network device supports a sensing function; and
a configuring module, configured to configure a network device management list, wherein the network device management list comprises a tracking area corresponding to the network device that supports the sensing function;
the transceiver module being further configured to send the network device management list to a user equipment (UE).

16. A user equipment (UE), comprising:
a transceiver module, configured to receive a network device management list configured by a core network element, wherein the network device management list comprises a tracking area corresponding to a network device that supports a sensing function.

17. A communication system, comprising a user equipment (UE), a core network element and a network device, wherein
the network device sends a first sensing support identifier to the core network element, wherein the first sensing support identifier is used to indicate that the network device supports a sensing function;
the core network element configures a network device management list according to the first sensing support identifier, wherein the network device management list comprises a tracking area corresponding to the network device that supports the sensing function;
the core network element sends the network device management list to the UE; and
the UE receives the network device management list.

18. A communication device, comprising: a transceiver, a memory, and a processor connected to the transceiver and the memory, respectively, wherein the processor is configured to control radio signal transceiving of the transceiver by executing computer-executable instructions stored on the memory, and capable of implementing the method of any one of claims 1-13.

19. A computer storage medium having stored thereon computer executable instructions that, when executed by a processor, cause the method of any one of claims 1-13 to be implemented.
